(19) Europäisches Patentamt
European Patent Office
Office européen des brevets

(11) Publication number : 0 368 500 B1

(12) # EUROPEAN PATENT SPECIFICATION

(45) Date of publication of patent specification : 23.06.93 Bulletin 93/25

(51) Int. Cl.$^5$ : **C09K 3/10**, C08L 83/04

(21) Application number : **89310873.8**

(22) Date of filing : **23.10.89**

(54) **Fast curing, neutral silicone sealants.**

(30) Priority : **28.10.88 US 263934**

(43) Date of publication of application : **16.05.90 Bulletin 90/20**

(45) Publication of the grant of the patent : **23.06.93 Bulletin 93/25**

(84) Designated Contracting States : **BE DE ES FR GB IT NL SE**

(56) References cited :
EP-A- 0 240 163
US-A- 3 175 993
US-A- 4 772 675

(73) Proprietor : **DOW CORNING CORPORATION**
**3901 S. Saginaw Road**
**Midland Michigan 48686-0994 (US)**

(72) Inventor : **Chu, Hsien-Kun**
**6 Harvest Hill**
**Wethersfield Connecticut (US)**
Inventor : **Kamis, Russell Peter**
**4756 Ronald, RR No. 4**
**Midland Michigan 48640 (US)**
Inventor : **Lower, Loren Dale**
**612 Sylvan Lane**
**Midland Michigan 48640 (US)**

(74) Representative : **Laredo, Jack Joseph et al**
**Elkington and Fife Prospect House 8**
**Pembroke Road**
**Sevenoaks, Kent TN13 1XR (GB)**



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

An improved silicone sealant consists essentially of trialkoxysilethylene endblocked polydiorganosiloxane, fumed silica reinforcement, diorganodialkoxysilane chain extender and titanium catalyst. The improved sealant has a faster cure, lower modulus and improved physical properties when compared to a similar sealant made with an alkyltrialkoxysilane crosslinker.

This invention relates to a process for producing silicone sealants containing polydiorganosiloxane having alkoxy endblocking, alkoxy functional chain extender and titanium catalyst, consisting essentially of (A) mixing in the absence of moisture (1) 100 parts by weight of a polymer of the formula

$$(R''O)_3\ Si\ \ Z\ \ (\overset{R}{\underset{R}{|}}\!\!\!SiO)_x\ \underset{R}{\overset{R}{Si}}\ \ Z\ \ Si\ (OR'')_3$$

where each R is free of aliphatic unsaturation and is at least one selected from the group consisting of monovalent hydrocarbon, monovalent halohydrocarbon and monovalent cyanoalkyl radicals of 1 to 18 inclusive carbon atoms, each R" is at least one selected from the group consisting of methyl, ethyl, propyl and butyl, Z is a divalent hydrocarbon radical or combination of divalent hydrocarbon radicals and siloxane radicals and $\underline{x}$ is of a value such that the polymer has a viscosity of from 0.5 to 3000 Pa·s at 25°C., (2) from 6 to 20 parts by weight of fumed silica filler, (3) from 0.1 to 14 parts by weight of a chain extender of the formula $R'_2Si(OR'')_2$ where R' is at least one selected from the group consisting of methyl, ethyl, propyl, phenyl and vinyl and R" is as described above, and (4) from 0.3 to 6.0 parts by weight of titanium catalyst, and (B) storing the mixture in the absence of moisture, to give a sealant which is stable in the absence of moisture and cures rapidly upon exposure to moisture.

An improved silicone sealant having a faster curing time can be produced by selecting a trialkoxysilethylene endblocked polydiorganosiloxane and using a diorganodialkoxysilane chain extender rather than the conventional trialkoxysilane crosslinker in the process of crosslinking the polymer. The composition also contains a fumed silica reinforcing filler and a titanium catalyst.

The method of this invention uses a polymer of the formula

$$(R''O)_3\ Si\ \ Z\ \ (\overset{R}{\underset{R}{|}}\!\!\!SiO)_x\ \underset{R}{\overset{R}{Si}}\ \ Z\ \ Si\ (OR'')_3 \qquad 1$$

where each R is free of aliphatic unsaturation and is at least one selected from the group consisting of monovalent hydrocarbon, monovalent halohydrocarbon and monovalent cyanoalkyl radicals of 1 to 18 inclusive carbon atoms, each R" is at least one selected from the group consisting of methyl, ethyl, propyl and butyl, Z is a divalent hydrocarbon radical or combination of divalent hydrocarbon radicals and siloxane radicals and $\underline{x}$ is of a value such that the polymer has a viscosity of from 0.5 to 3000 Pa·s at 25°C. R can be any of those monovalent hydrocarbon, monovalent halohydrocarbon or monovalent cyano-alkyl radicals of 1 to 18 inclusive carbon atoms which are known to be useful in silicone sealant materials. The preferred radicals are methyl, ethyl, propyl, phenyl and trifluoropropyl. Z is a divalent hydrocarbon radical or combination of divalent hydrocarbon radicals and siloxane radicals. The divalent hydrocarbon radical can be from 2 to 15 carbon atoms in the form of a divalent alkylene or arylene radical such as ethylene, propylene, hexylene,

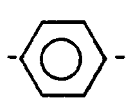 ,

diethylbenzene and

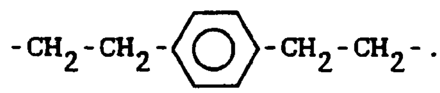

A preferred Z may be represented by the formula

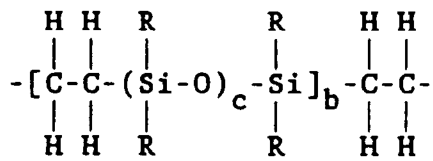

where R is as defined above, b is 0 or 1 and c is from 1 to 6.

A preferred polymer is represented by the formula

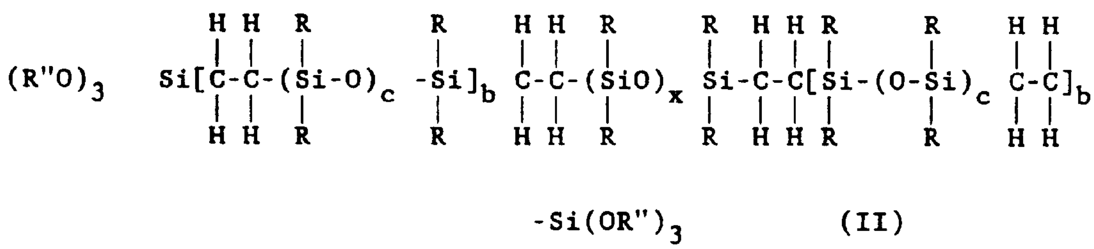

(II)

where R and R" are as defined above, b is 0 or 1, c is from 1 to 6 and x is such that the viscosity is from 0.5 to 3000 Pa·s at 25°C.

A preferred polymer, obtained when b is 0, is of the formula

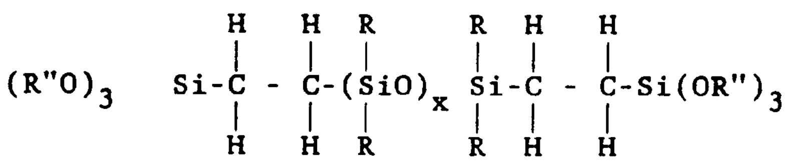

(III)

or, when b is 1 and c is 1, is of the formula

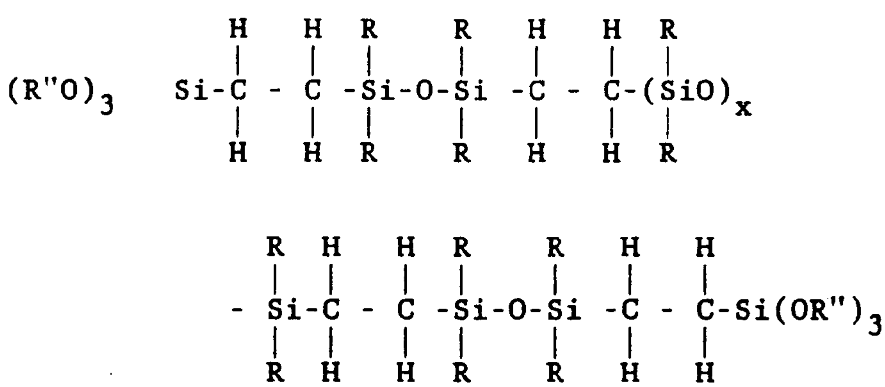

(IV)

where R and R" are as described above. Methyl radical is preferred for R and R". The radicals can be the same or combinations of the above where at least 50 mole percent of the radicals are methyl radicals.

The polymer of formula (II) can be manufactured by reacting a vinyl endblocked polydiorganosiloxane with an endcapping composition of the formula

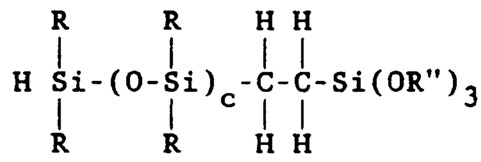

where R and R" are as defined above and c is 1 to 6. This endcapping composition can be produced by a method comprising

(A) mixing 1 mole of a composition (a) of the formula

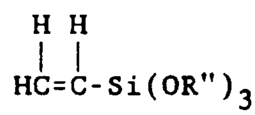

where R and R" are as defined above, with greater than 2 moles of a composition (b) of the formula

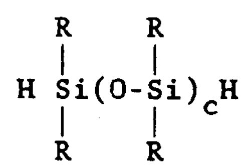

where R is as defined above and c is from 1 to 6, in the presence of a platinum catalyst and allowing to react, then,

(B) optionally stripping the excess composition (b) from the product, to give an endcapping composition of the formula as given above. When c is equal to 1, the product obtained is the endcapping composition shown above which is used to produce the polymer of formula (IV). A preferred endcapping composition is that obtained when c is equal to 1. The above endcapping composition, it's method of manufacture and it's use in the manufacture of silicone sealants, having an alkoxy functional silane crosslinker and a titanium catalyst, is taught in U.S. Patent Application No. 148,196, filed January 28, 1988, assigned to the assignee of the instant application.

The polymer of formula (III) may be produced by reacting a hydrogen endblocked polydiorganosiloxane with a silane of the formula

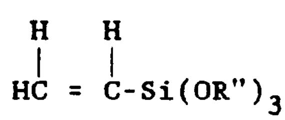

in the presence of a platinum catalyst such as chloroplatinic acid at a temperature of from 30 to 150°C. Methods of making these polymers are taught in U.S. Patent No. 3,175,993, issued March 30, 1965, to Weyenberg.

The polymer of formula (IV) can be manufactured by reacting a vinyl endblocked polydiorganosiloxane with an endcapping composition of the formula

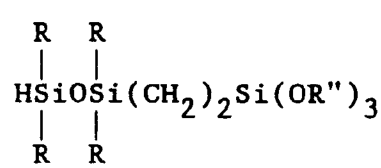

where R is as defined above, using a platinum catalyst to cause the materials to react. This endcapping composition is prepared by reacting $ViSi(OR")_3$, where Vi is vinyl radical, with $(R_2HSi)_2O$ in the presence of a platinum catalyst where only one end of the disilane is reacted. This can be done by combining 1 mole of the $ViSi(OR")_3$ with greater than 2 moles of the disilane. When this mixture is combined with a platinum catalyst, there is a slightly exothermic reaction after a few minutes at room temperature. The color changes from clear to light yellow. A byproduct will be present consisting of product produced by the reaction of $ViSi(OR")_3$ to both ends of the silane. This byproduct can be left in the material. At a 1 to 2 ratio, there is about 15 percent byproduct produced. If the ratio is changed to 1 to 4, the byproduct drops to about 5 percent. The excess silane is then stripped from the product and the product can be distilled if desired.

The above polymers can also be produced by using similar siloxanes and silanes in which the location of the hydrogen atom and the vinyl group which react together are reversed.

Fumed silica fillers (2) are those fillers produced commercially by the reaction of silicon tetrachloride in hydrogen to give very fine particles of silica, having a surface area from 50 to 700 $m^2/g$. These fillers may be used with untreated filler surfaces or with treated filler surfaces, the treatment being used to modify the filler surface so that it properly reacts with the polymer and the other ingredients in the sealant. The amount of filler used can obviously be varied within wide limits in accordance with the intended use. For example, in some cases the sealant could be used with no filler, but it would have very low physical properties. Fumed silica fillers are commonly used in amounts from 5 to 60 parts by weight to give the highest physical properties, such as tensile strength, with a preferred range of from 6 to 15 parts by weight.

The process of this invention uses a chain extender (3) of the formula $R'_2Si(OR")_2$ where R' is selected from the group consisting of methyl, ethyl, propyl, phenyl and vinyl and R" is as defined above. Preferred chain extenders are methylvinyldimethoxysilane and dimethyldimethoxysilane. These alkoxy silanes and their method of manufacture are well known. The amount of chain extender used can vary from 0.1 to 14 parts by weight, based upon 100 parts by weight of the polymer (1). The preferred amount of chain extender is from 2 to 12 parts by weight. As more chain extender is added, the modulus of the cured sealant decreases and the cure rate of the composition increases initially and then levels off, in particular the tack free time.

The sealants of this invention are cured through the use of a titanium catalyst (4). The titanium catalyst can be any of those known to be useful in catalyzing the moisture induced reaction of alkoxy containing siloxanes or silanes. Preferred are a titanium catalyst such as titanium naphthenate, titanium esters such as tetrabutyltitanate, tetra-2-ethylhexyltitanate, tetraphenyltitanate, triethanolaminetitanate, organosiloxytitanium compounds such as those described in U.S. Patent No. 3,294,739 and beta-dicarbonyl titanium compounds such as those described in U.S. Patent No. 3,334,067. Preferred catalysts include tetrabutyltitanate, tetraisopropyltitanate, bis-(acetylacetonyl)diisopropyltitanate and 2,5-di-isopropoxy-bis-ethylacetoacetate titanium. The amount of catalyst is from 0.2 to 6.0 parts by weight per 100 parts by weight of polymer (1). Preferred are from 0.5 to 3.0 parts by weight.

The process of this invention mixes the ingredients in the absence of moisture, because the ingredients react to form crosslinks in the presence of moisture. Preferably, the polymer (1) and filler (2) are mixed until uniform and then the mixture is deaired to remove air and absorbed moisture from the mixture. Then the chain extender (3) and catalyst (4) are added without allowing any moisture to enter the mixture. The mixture can be deaired again to remove byproduct alcohol produced when the mixture is made and then placed into airtight storage containers, such as the common tubes used for sealants and stored until ready for use. Another preferred method mixes the alkoxysilethylene ended polymer (1) with a deaired mixture of chain extender (3) and titanium catalyst (4), which are added in the absence of exposure to moisture. The chain extender (3) and titanium catalyst (4) can be added separately or they can be mixed together and then added as a mixture. They are thoroughly stirred to give a uniform mixture. Then the fumed silica filler (2) is added in the absence of moisture and stirred until uniform. The uniform mixture is then preferably deaired, then sealed into storage containers, sealant tubes for example, to store it until it is to be used. When the sealant is removed from the storage tube and exposed to the atmosphere it cures rapidly to give an elastomeric product.

The following examples are included for illustrative purposes only and should not be construed as limiting the invention which is properly set forth in the appended claims. All parts are parts by weight.

## Example 1

A sealant base was prepared by mixing 100 parts of a trimethoxysilethylene endblocked polydimethylsiloxane having a viscosity of 55 Pa·s at 25°C. and 10 parts of fumed silica having a surface area of 250 m2/g until uniform. The mixture was then deaired by centrifuging and placing in a vacuum chamber, then portions were mixed in the absence of moisture with the amount and kind of crosslinker or chain extender shown in Table I and 1 part of tetrabutyltitanate, to give a series of moisture curable sealants. First, a comparative sample

was prepared using methyltrimethoxysilane crosslinker, shown in the table as MTM. Next, the same amount of dimethyldimethoxysilane chain extender was substituted for the trifunctional crosslinker in the comparative sample, this is shown as DMDM. A third sample was a repeat of sample 2 with methylvinyldimethoxysilane chain extender substituted for the DMDM. This is shown as MVDM. Samples 4 and 5 contain the amount of chain extender required to give the molar amount of methoxy radical found in the crosslinker of comparative sample 1.

The skin over time (SOT) and tack free time (TFT) of the sealants were measured with the results shown in Table I. The skin over time is defined as the time required for the material to cure to the point where it no longer adheres to a clean fingertip lightly applied to the surface. The cure conditions are 23°C. and 50 percent relative humidity. The tack free time is defined as the time in minutes required for a curing material to form a non-tacky surface film. A sample is spread on a clean smooth surface and timing is begun. Periodically, a clean strip of polyethylene film, 1 inch (2.5 cm) wide, is laid upon a fresh surface and a one ounce (31.8 g) weight in the form of a plate approximately 1 inch by 2 inches (2.5 by 5 cm) is applied to it. After 4 seconds, the weight is removed and the strip gently pulled off. The time when the strip pulls cleanly away from the sample is recorded as the tack free time. In addition to the curing rate measurements of skin over time (SOT) and tack free time (TFT), the cured samples were measured for physical properties. The durometer was measured in accordance with ASTM D 2240 and the Tensile Strength, Elongation and Tensile Modulus in accordance with ASTM D 412.

Table I

| Sample | 1* | 2 | 3 | 4 | 5 |
|---|---|---|---|---|---|
| MTM, parts/100parts polymer | 4 | | | | |
| MVDM, " | | 4 | | 5.8 | |
| DMDM, " | | | 4 | | 5.3 |
| SOT | 87 | 33 | 32 | 28 | 32 |
| TFT | 117 | 36 | 33 | 29 | 33 |
| Durometer, Shore A | 35 | 25 | 21 | 24 | 19 |
| Tensile Strength, (psi)KPa | 1123.8(163) | 903.2(131) | 696.3(101) | 708.3(102) | 703.3(102) |
| Elongation, percent | 141 | 228 | 259 | 190 | 349 |
| Modulus, 100%, (psi)KPa | 882.5(128) | 510.2(74) | 386.1(56) | 475.7(69) | 351.6(51) |

* comparative example

The substitution of chain extender in place of cross linker in the sealant gives a composition with reduced cure time, lower modulus, decreased durometer and increased elongation.

Example 2

Samples were prepared as in Example 1, using 100 parts of polymer, 10 parts of fumed silica, 1.6 parts of catalyst and the amount of dimethyldimethoxysilane chain extender shown in Table II. The results in Table II show that the tack free time and the slump are decreased as the amount of chain extender is increased.

Table II

| Amount of DMDM parts | Slump mm(inches) | SOT min | TFT min |
|---|---|---|---|
| 4 | 88.9(3.50) | 10 | 60 |
| 6 | 25.4(1.75) | 13 | 45 |
| 8 | 31.8(1.25) | 14 | 24 |
| 10 | 30.0(1.18) | 12 | 24 |

## Claims

1. A process for producing silicone sealants containing polydiorganosiloxane having alkoxy endblocking, alkoxy functional chain extender and titanium catalyst, consisting essentially of
   (A) mixing in the absence of moisture
   (1) 100 parts by weight of a polymer of the formula

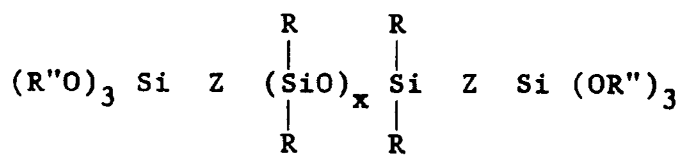

where each R is free of aliphatic unsaturation and is at least one selected from the group consisting of monovalent hydrocarbon, monovalent halohydrocarbon and monovalent cyanoalkyl radicals of 1 to 18 inclusive carbon atoms, each R" is at least one selected from the group consisting of methyl, ethyl, propyl and butyl, Z is a divalent hydrocarbon radical or combination of divalent hydrocarbon radicals and siloxane radicals and x is of a value such that the polymer has a viscosity of from 0.5 to 3000 Pa·s at 25°C.,
   (2) from 6 to 20 parts by weight of fumed silica filler,
   (3) from 0.1 to 14 parts by weight of a chain extender of the formula $R'_2Si(OR")_2$ where R' is at least one selected from the group consisting of methyl, ethyl, propyl, phenyl and vinyl and R" is as defined above, and
   (4) from 0.3 to 6.0 parts by weight of titanium catalyst, and
   (B) storing the mixture in the absence of moisture, to give a sealant which is stable in the absence of moisture and cures rapidly upon exposure to moisture.

2. The silicone sealant produced by the process of claim 1.

## Patentansprüche

1. Verfahren zur Herstellung von Silikondichtungsmassen, die Polydiorganosiloxane mit blockierenden Alkoxyendgruppen, Alkoxy-funktionale Kettenverlängerer und Titankatalysatoren enthalten, das im wesentlichen besteht aus
   (A) Mischen in Abwesenheit von Feuchtigkeit von
   (1) 100 Gewichtsteilen eines Polymeren der Formel

$$(R''O)_3\,Si-Z-(\overset{R}{\underset{R}{Si}}O)_{\underline{x}}\,Si-Z-\overset{R}{\underset{R}{Si}}\,(OR'')_3$$

in der R nicht aliphatisch ungesättigt und ein einwertiger Kohlenwasserstoffrest, ein einwertiger Halogenkohlenwasserstoffrest oder ein Cyanalkylrest mit 1 bis einschließlich 18 Kohlenstoffatomen ist, R" für Methyl, Ethyl, Propyl oder Butyl steht, Z einen zweiwertigen Kohlenwasserstoffrest oder eine Kombination aus zweiwertigen Kohlenwasserstoffresten und Siloxanresten bezeichnet und $\underline{x}$ einen solchen Wert hat, daß das Polymere eine Viskosität von 0,5 bis 3000 Pa.s bei 25°C aufweist,

(2) 6 bis 20 Gewichtsteilen gedämpftes Siliziumdioxid als Füllstoff,

(3) 0,1 bis 14 Gewichtsteilen eines Kettenverlängerers der Formel $R'_2SiO(OR'')_2$, in der R' Methyl, Ethyl, Propyl, Phenyl oder Vinyl bezeichnet und R" die angegebene Bedeutung hat, und

(4) 0,3 bis 6,0 Teilen Titankatalysator, und

(B) Aufbewahren der Mischung in Abwesenheit von Feuchtigkeit, so daß man eine Dichtungsmasse erhält, die in Abwesenheit von Feuchtigkeit stabil ist und rasch vernetzt, wenn sie der Feuchtigkeit ausgesetzt wird.

**2.** Silikondichtungsmasse, erhalten nach dem Verfahren des Anspruchs 1.

## Revendications

**1.** Un procédé pour produire des matériaux d'étanchéité de silicone contenant un polydiorganosiloxane à extrémités bloquées par des groupes alcoxy, un agent d'allongement de chaîne à fonctionnalité alcoxy et un catalyseur au titane, consistant essentiellement à

(A) mélanger en l'absence d'humidité

(1) 100 parties en poids d'un polymère de la formule

$$(R''O)_3\;Si\;\;Z\;\;(\overset{R}{\underset{R}{Si}}O)_x\;\overset{R}{\underset{R}{Si}}\;\;Z\;\;Si\;(OR'')_3$$

où chaque R est exempt d'insaturation aliphatique et représente au moins un membre du groupe formé par les radicaux hydrocarbonés monovalents, les radicaux halogénohydrocarbonés monovalents et les radicaux cyanalkyles monovalents ayant 1 à 18 atomes de carbone inclusivement, chaque R" est au moins un membre du groupe formé par les radicaux méthyle, éthyle, propyle et butyle, Z est un radical hydrocarboné divalent ou une combinaison de radicaux hydrocarbonés divalents et de radicaux siloxanes, et la valeur de $\underline{x}$ est telle que le polymère ait une viscosité de 0,5 à 3000 Pa.s à 25°C,

(2) 6 à 20 parties en poids d'une charge consistant en silice de fumée,

(3) 0,1 à 14 parties en poids d'un agent d'allongement de chaîne de la formule $R'_2Si(OR'')_2$ où R' est au moins un membre du groupe formé par les radicaux méthyle, éthyle, propyle, phényle et vinyle, et R" est tel que défini ci-dessus, et

(4) 0,3 à 6,0 parties en poids d'un catalyseur au titane, et

(B) conserver le mélange en l'absence d'humidité, pour obtenir un matériau d'étanchéité qui est stable en l'absence d'humidité et durcit rapidement par exposition à l'humidité.

**2.** Le matériau d'étanchéité de silicone produit par le procédé de la revendication 1.